# EUROPEAN PATENT SPECIFICATION

(11) **EP 1 037 468 B1**
(45) Date of publication and mention of the grant of the patent: **10.05.2017**
(21) Application number: 00200835.7
(22) Date of filing: 08.03.2000
(51) Int. Cl.: H04N 19/64, H04N 19/63, H04N 19/36

(54) **Image coding using embedded zerotree patterns and bitplanes**
Bildkodierung mit eingebetteter Zerotree-Kodierung und Bitebenenkodierung
Codage d'images utilisant des motifs enrobés à arborescence nulle et des plans de bits

(30) Priority: 08.03.1999 US 123330 P
(43) Date of publication of application: 20.09.2000
(73) Proprietor: Texas Instruments Incorporated, Dallas, Texas 75251 (US)
(72) Inventor: Liang, Jie, Plano, Texas 75074 (US)
(74) Representative: Zeller, Andreas

(56) References cited:
- EP-A- 0 547 528
- EP-A- 0 892 557
- WO-A1-98/44455
- US-A- 5 412 741
- US-A- 5 748 786
- LI J ET AL: "AN EMBEDDED DCT APPROACH TO PROGRESSIVE IMAGE COMPRESSION" PROCEEDINGS OF THE INTERNATIONAL CONFERENCE ON IMAGE PROCESSING (ICIP),US,NEW YORK, IEEE, 1996, pages 201-204, XP000780627 ISBN: 0-7803-3259-8
- SHAPIRO J M: "EMBEDDED IMAGE CODING USING ZEROTREES OF WAVELET COEFFICIENTS" IEEE TRANSACTIONS ON SIGNAL PROCESSING,US,IEEE, INC. NEW YORK, vol. 41, no. 12, 1 December 1993 (1993-12-01), pages 3445-3462, XP000426658 ISSN: 1053-587X

## Description

### TECHNICAL FIELD OF THE INVENTION

The present invention relates to digital image compression and coding and decoding.

### BACKGROUND OF THE INVENTION

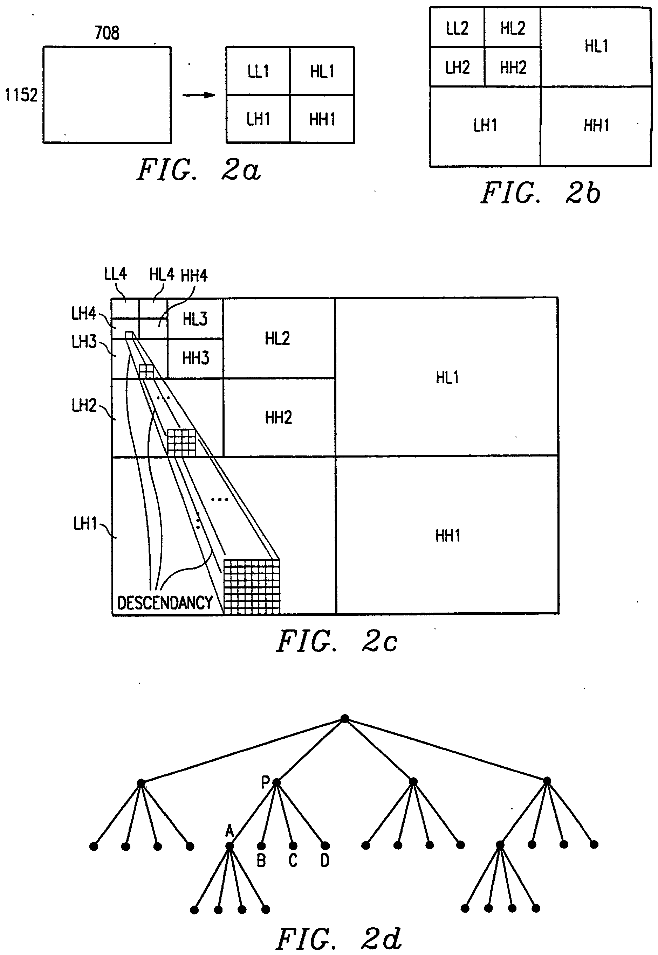

For encoding and compressing a single frame as in JPEG or an I frame in MPEG, Shapiro, Embedded Image Coding Using Zerotrees of Wavelet Coefficients, 41 IEEE Tr.Sig,Proc. 3445 (1993) provides a wavelet hierarchical subband decomposition which groups wavelet coefficients at different scales and predicts zero coefficients across scales. This provides a quantization and fully embedded bitstream in the sense that the bitstream of a lower bitrate is embedded in the bitstream of higher bitrates. Figures 2a-2c illustrate a wavelet transform decomposition.

Coding efficiency is, by definition, important to any image compression method. However, increasingly, the features or properties of a coding method play an increasing role in determining the usefulness of the method in practice. Scalability is a very important feature for any image coding method in many applications such as digital photography, Internet, image database, etc. There are many aspects of the scalability property, which can be summarized as follows:
Quality scalability: the bitstream can be parsed (without complicated processing) into sub-bitstream that can be decoded to have different quality reconstruction of the original image. An important case is progressive quality scalability, which means that the bitstream can be decoded progressively, with reconstructed images getting increasingly better with more and more bits received.

Resolution scalability: the bitstream can be parsed into sub-bitstream that represents different resolution of the original image. Progressive resolution scalability is a special case.
Computational complexity scalability: this quality enables the application to adjust the encoding/decoding complexity easily and with minimal change to most of the coding modules.

It is often desirable that both quality and resolution scalability are present in the same bitstream, so that the decoder can choose the desirable resolution and the desirable rate according to its own constraints which cannot be decided at the encoding time. Computational complexity scalability is mostly tied to the memory requirement and speed profile of the method. In many embedded systems, memory is a serious constraint, and speed of encoding/decoding is crucial (for instance, in digital still cameras, shot-to-shot delay is a crucial quality factor in evaluating cameras).

A good coding method should allow a good balance among all these requirements.

In this regard, International Patent Application WO98/4445 and United States Patent 5,412,741 show zerotree based methods which proceed depthwise and in which unnecessary coding is avoided by identifying tree cluster members having insignificant descendants and skipping encoding of those insignificant descendants.

### SUMMARY OF THE INVENTION

The present application provides methods as set forth in the Claims.

Embodiments of the invention have advantages over other wavelet coders (including other zerotree based image coders), in that the method is more scalable, not just in quality and spatial resolutions, but also in computational complexity. EZPAB allows for the optional use of no-entropy coding mode and context-based arithmetic coding mode, which gives a good tradeoff between computational complexity/power consumption
and coding efficiency. At the meantime, it consumes minimal amount of memory, which size is independent of image sizes.

### BRIEF DESCRIPTION OF THE DRAWINGS

Specific embodiments of the present invention will now be described by way of example, with reference to the accompanying drawings in which:
Figure 1 shows a preferred embodiment coding system.
Figures 2a-2d illustrate wavelet decomposition and tree structure.
Figure 3 is a flow diagram.
Figure 4 illustrates an example.

### DESCRIPTION OF THE PREFERRED EMBODIMENTS

A preferred embodiment embedded zerotree pattern and bitplane (EZPAB) coding encodes the wavelet coefficients of an image bitplane-by-bitplane. At each location in the HH, LH, or HL subbands (other than at the finest decomposition level), there are two bits associated with that location in the bitplane: the bit that represents the value of the wavelet coefficient at that location (value-bit), and the bit that represents the significance of the quadtree (zerotree) that is rooted at that location (tree-bit). Encode the value-bit and tree-bit for all four neighbors that have the same parent, and go from one four-coefficient cluster to the next, from the coarsest decomposition level to the finest decomposition level, and from one tree-block to the next. The value-bits can be further classified as significance value-bit, sign value-bit, and refinement (of magnitude) value-bit. Following the scanning procedure, good coding efficiency can be achieved even without any use of entropy coding (that is, simply put the uncoded bits into the bitstream). Another option is to encode these value-bits and tree-bits with context-based arithmetic coding. The coding efficiency is about 10-15% better, and is competitive with the best coder known, with the advantages of less memory requirement and faster speed.

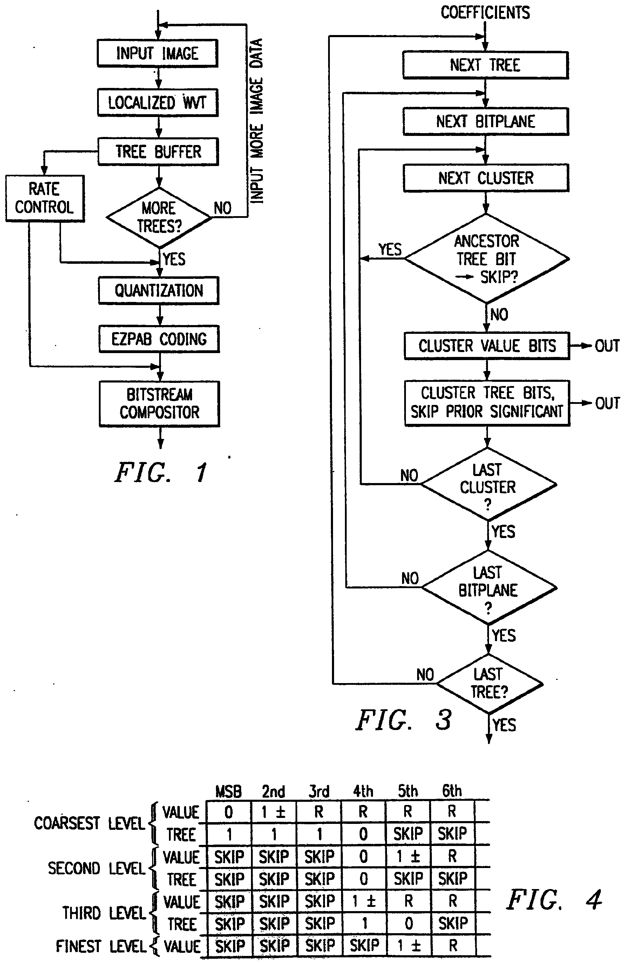

Figure 1 illustrates the overall procedure of the EZPAB coder. The image can be input either in block-by-block mode or line-by-line mode. A localized wavelet transform is used to transform the image into wavelet coefficients. Then, the wavelet coefficients are organized into tree structure data, and stored in the tree buffer. Once a zerotree is ready, the system calls on the EZPAB coding module, and feeds the tree structured data to the EZPAB module. When no trees are left in the buffer, it sends a signal to the input module to input more image data (again in either block-by-block or line-by-line fashion). The core part of the coding system is the EZPAB coding module operating on a single full-depth zerotree. The next section shows in more detail the coding procedure for a single zerotree. The bits can be transmitted directly from the EZPAB coding module or can be first arithmetically encoded for transmission. The magnitude scale is determined after all trees are encoded with a minimum quantization level and in a transmission buffer by simply deleting leading insignificant bitplanes.

### EZPAB coding on a single zerotree

Figure 2d shows the structure of a full-depth zerotree for the case of a four-level decomposition. Each non-leaf node (P) has four children nodes. These four-children-node clusters (A,B,C,D) are the basic coding units for EZPAB. Proceed from top level down, and from left to right. For each cluster, first encode their significance or magnitude refinement bits, followed by the tree-bits (except for the finest decomposition level) that indicate the significance of the zerotrees.

### Coding of the significance bits S(A), S(B), S(C), and S(D)

For each four-children cluster that cannot derive its significance from the coding contexts (that is, they are not part of a zerotree that has already been found insignificant in the current bitplane), explicitly encode their significance.

Encode the significance bits from A to D, and skip any coefficients that have already been found significant. For those coefficients that have been found significant in previous bitplanes, send the refinement (of the magnitude) bits instead. For the newly significant coefficient, encode its sign bit.

The following is the pseudo-code that describes the procedure:

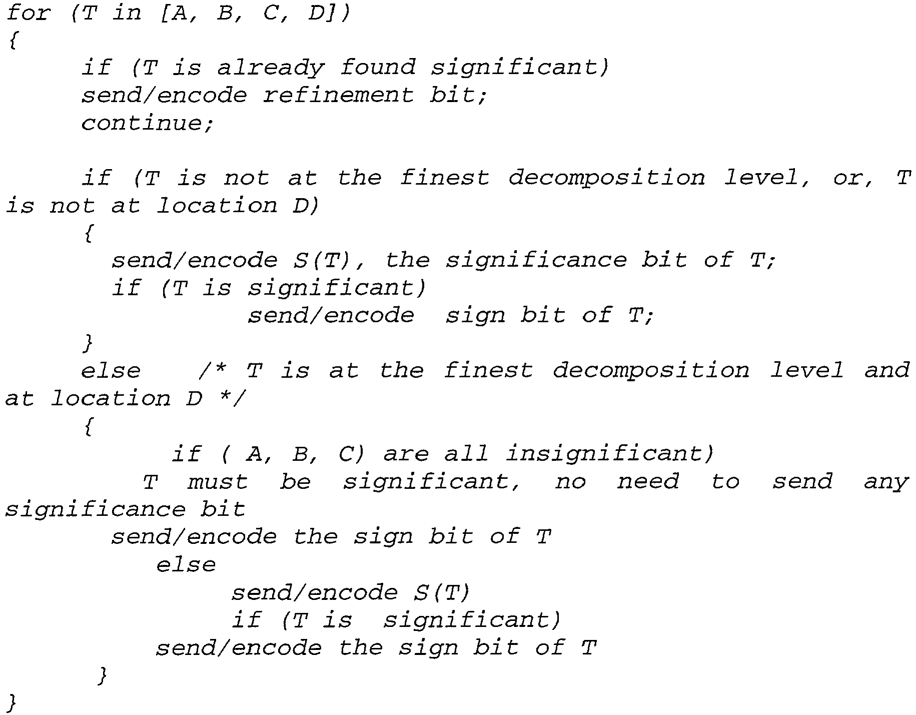

Note that nodes D in the finest decomposition level may be skipped when their codes are determined by prior codes, such as when the cluster is significant but nodes A,B, and C are insignificant.

After encoding the value-bits for A,B,C,D, we then encode the four tree-bits that are associated with the four locations. Notice that there is no need to encode tree-bits for the finest decomposition level because a leaf does not have any children. The following describes the procedure for encoding the tree-bits:

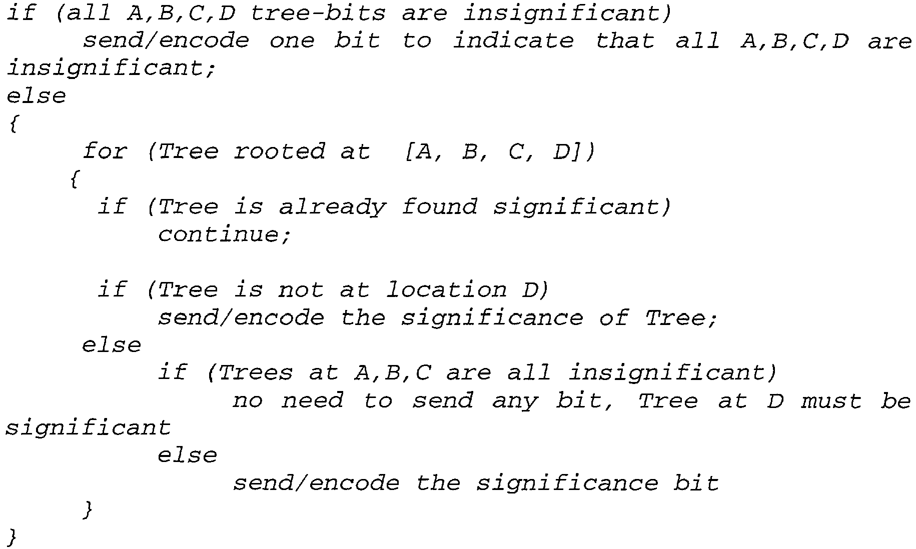

Note that again nodes D may be skipped when their codes are determined by prior codes, such as when the cluster has at least one significant tree bit but nodes A, B, and C have insignificant tree bits.

Also, in all of the above, only encode the tree-bits or value-bits for the four-neighbor clusters that are not part of a larger zerotree. Otherwise, their significance can be derived from the context of the process. Figure 3 is a general flow diagram.

In both procedures, use a "send" or "encode" to indicate which of the two modes is enabled. For a very low-complexity mode, use send, which means that no entropy coding is done here, just put the bits into the bitstream. For a computational intensive mode, use encode which means a context-based arithmetic coding to encode the bits. For the value-bit, the context is determined by the number of significant coefficients in the same cluster as well as the location of the current coefficient (A,B,C or D), which is a total of 4x4=16 contexts. For the tree-bit, the context is determined by the number of significant trees in the same cluster and the significance of the coefficient at the same location, which is a total of 4x2=8 contexts.

Thus the foregoing provides a coding method that strikes a balance among all the different features. This enables a mode that requires no arithmetic or Huffman coding. The bits that represent zerotree patterns, coefficient signs, and magnitude bits are directly output to the final bitstream. On the other hand, without any change to the coding procedures (the same transform, coefficient scanning, zerotree forming procedures), one can encode those same bits with context-based arithmetic coding. All features and memory requirement remain the same between these two modes, but significant speed up can be achieved with the elimination of arithmetic coding and context forming.

Figure 4 illustrates an example of the coding. In particular, Figure 4 represents the coding of the four nodes in a vertical slice through a full-depth tree; the columns represent the bitplanes with most significant bit to the left and the rows represent the value and tree bits from coarsest to finest decomposition level with the coarsest at the top. Thus the coding proceeds from top to bottom through a tree and proceeds left to right through the bitplanes. At the top of the first column the 0 indicates an insignificant value at the coarsest level in the most significant bitplane. The 1 below this 0 indicates that this coarsest level node is the root of a zerotree (that is, in the most significant bitplane all of the descendant (children) nodes of this full-depth tree are insignificant). Because all children node coefficients are insignificant, they are skipped in the coding as indicated by the remainder of the first column.

The top entry 1 of the second column indicates the coarsest level node is significant in the second most significant bitplane (that is, the value of the corresponding coefficient has its first nonzero bit in this bitplane) and the ± indicates a second value bit is used to indicate the sign of the coefficient. The 1 in the second row indicates that all of the children are still insignificant and are skipped.

The top entry of the third column indicates the second (refinement) bit of the binary expansion of the coefficient at the coarsest level node. Again, the 1 in the second row indicates a zerotree so the children are again skipped.

The top entry of the fourth column indicates the third (refinement) bit of the coefficient at the coarsest level node. The 0 in the second row indicates that at least one of the children nodes has a significant coefficient in the fourth bitplane. Thus the cluster of four children at the second level have their value bits and then their tree bits encoded. For the second-level child node (of the cluster) in the third row the value bit 0 indicates that the coefficient is still insignificant in the this (fourth) bitplane but the tree bit 0 indicates than at least one descendant in either the third or fourth level is significant. The 1 in the fifth row indicates that this third-level child node coefficient has its leading nonzero bit in this bitplane and the ± again indicates the sign; the other three nodes in its cluster have their value bits encoded at this time. The 1 in the sixth row indicates that this third-level child is the root of a zerotree, so its four children are skipped. The other three nodes in its cluster have their tree bits encoded at this time.

The fifth column (bitplane) has from top to bottom: the fourth (refinement) bit for the coarsest level node coefficient, the second row skip of the tree bit because the tree was already found significant in the fourth column. The third row 1 and ± are two bits that indicate this second-level child's coefficient has its first significant (nonzero) bit in this bitplane and its sign. The fourth row tree bit is skipped because the tree was already found significant in the fourth bitplane. The fifth row is the second (refinement) bit for the third-level child's coefficient, and the sixth row 0 indicates that at least one fourth-level child is significant in this bitplane. The seventh row 1 and ± are two bits that indicate this fourth-level child's coefficient has its first significant (nonzero) bit in this bitplane and its sign. The sixth column (bitplane) shows value bits as refinement bits and skips tree bits because of previous tree significance.

### Decoding

The decoding of the bitstream just interprets the bits according to the EZPAB coding to recover the wavelet coefficients (to whatever number of refinement bits usable) and then performs an inverse wavelet transformation to recover the image. Of course, error correction and other channel coding may be imposed for transmission or storage.

### Experimental results

In this section, we provide the coding results using the proposed method. We use both options of the EZPAB coder: option A - no entropy coding, and option B - using arithmetic coding. We choose the commonly used image Lena (512x512). The results include all overhead, including the 4 bytes resynchronization marker for each subband at each bitplane (a significant overhead, but necessary for good error resilience properties).

**Table 1. Coding Results**

| EZPAB Option A (no entropy coding) | | EZPAB Option B (with arithmetic coding) | |
|---|---|---|---|
| Bitrate (bit/pixel) | PSNR (db) | Bitrate (bit/pixel) | PSNR (db) |
| 2.004 | 45.294 | 2.193 | 45.294 |
| 0.998 | 40.337 | 1.098 | 40.337 |
| 0.478 | 36.931 | 0.526 | 36.931 |
| 0.251 | 34.003 | 0.284 | 34.003 |
| 0.125 | 30.882 | 0.124 | 30.032 |

## Claims

1. A method of image coding comprising:
(a) wavelet transforming a portion of a digital image into hierarchical trees of coefficients;
(b) for a first tree of said hierarchical trees and for a first cluster of children nodes derived from a first parent node of said first tree, after encoding said first parent node, encoding a value and tree indication for each of the children nodes in said first cluster and:
(i) skipping said value and tree indication when said encoding of said first parent node so indicates;
(ii) indicating significance of descendent nodes using said tree indication for a first or subsequent one of said children nodes;
(iii) indicating significance of said first or subsequent one of said children nodes using said tree indication for said first of said children nodes;
(iv) skipping said value and tree indication for said first or subsequent one of said children nodes when determinable from encoding of the other of said children nodes of said first cluster
(v) repeating steps (i) to (iv) for each of the children nodes in said first cluster; and
(vi) omitting said tree indication if said children nodes in said first cluster have no descendent nodes;
(c) repeating said foregoing steps (b) for a second, third, ... , and Nth cluster of children nodes derived from a second, third, ... , Nth parent node of said first tree;
(d) repeating said foregoing steps (b) & (c) for a second, third, ... , and Mth tree of said hierarchical trees.

2. A method of image coding as claimed in claim 1 further comprising:
repeating said steps (b) & (c) for each bitplane of said coefficients.

3. A method of image coding as claimed in claim 1 or claim 2, wherein the step of repeating said steps (b) & (c) comprises:
arithmetic coding of said values and tree indications using a context that for children nodes includes other children nodes of a common cluster.

4. A method of image coding as claimed in any preceding claim, wherein the step of encoding said value comprises:
encoding a value selected from a group of values comprising a significance bit plus a sign bit, an insignificance bit, a refinement bit, and a skip.

5. A method of image coding as claimed in any preceding claim, wherein the step of encoding said tree indication comprises:
encoding a tree indication selected from a group of tree indications comprising a zerotree root, a significance descendent node, and a skip.

## Patentansprüche

1. Verfahren zum Bildkodieren, das folgende Schritte umfasst:
(a) Wavelet-Transformieren eines Teils eines digitalen Bildes in hierarchische Bäume bzw. Trees von Koeffizienten;
(b) für einen ersten Baum der hierarchischen Bäume und für eine erste Gruppierung von Kinderknoten, die von einem ersten Elternknoten des ersten Baums abgeleitet wurden, nach dem Kodieren des ersten Elternknotens, Kodieren eines Werts und einer Baumangabe für jeden der Kinderknoten in der ersten Gruppierung und:
(i) Überspringen des Werts und der Baumangabe, wenn die Kodierung des ersten Elternknotens solches angibt;
(ii) Angeben der Signifikanz von Abkömmlingsknoten unter Verwendung der Baumangabe für einen ersten oder nachfolgenden der Kinderknoten;
(iii) Angeben der Signifikanz des ersten oder des nachfolgenden der Kinderknoten unter Verwendung der Baumangabe für den ersten der Kinderknoten;
(iv) Überspringen des Werts und der Baumangabe für den ersten oder nachfolgenden der Kinderknoten, wenn dieser aus der Kodierung des anderen der Kinderknoten der ersten Gruppierung bestimmbar ist;
(v) Wiederholen der Schritte (i) bis (iv) für jeden der Kinderknoten in der ersten Gruppierung; und
(vi) Weglassen der Baumangabe, falls die Kinderknoten in der ersten Gruppierung keine Abkömmlingsknoten aufweisen;
(c) Wiederholen der vorhergehenden Schritte (b) für eine zweite, dritte, ... und N-te Gruppierung von Kinderknoten, die von einem zweiten, dritten ... N-ten Elternknoten des ersten Baums abgeleitet wurden;
(d) Wiederholen der vorhergehenden Schritte (b) & (c) für einen zweiten, dritten, ... und M-ten Baum der hierarchischen Bäume.

2. Verfahren zum Bildkodieren nach Anspruch 1, das ferner Folgendes umfasst:
Wiederholen der Schritte (b) & (c) für jede Bitebene der Koeffizienten.

3. Verfahren zum Bildkodieren nach Anspruch 1 oder Anspruch 2, wobei der Schritt des Wiederholens der Schritte (b) & (c) Folgendes umfasst:
arithmetisches Kodieren der Werte und der Baumangaben unter Verwendung eines Kontexts, der für Kinderknoten andere Kinderknoten einer gemeinsamen Gruppierung beinhaltet.

4. Verfahren zum Bildkodieren nach einem der vorhergehenden Ansprüche, wobei der Schritt des Kodierens des Werts Folgendes umfasst:
Kodieren eines Werts, der aus einer Gruppe von Werten ausgewählt wird, die ein Signifikanzbit plus ein Vorzeichenbit, ein Insignifikanzbit, ein Verfeinerungsbit und einen Sprung umfasst.

5. Verfahren zum Bildkodieren nach einem der vorhergehenden Ansprüche, wobei der Schritt des Kodierens der Baumangabe Folgendes umfasst:
Kodieren einer Baumangabe, die aus einer Gruppe von Baumangaben ausgewählt wird, die eine Zerotree- bzw. Nullbaum-Wurzel, einen Signifikanz-Abkömmlingsknoten und einen Sprung umfasst.

## Revendications

1. Procédé de codage d'image comprenant les étapes suivantes :
(a) transformer par ondelettes une partie d'une image numérique en arbres hiérarchiques de coefficients ;
(b) pour un premier arbre desdits arbres hiérarchiques et pour un premier groupe de noeuds enfants dérivés d'un premier noeud parent dudit premier arbre, après le codage dudit premier noeud parent, coder une valeur et une indication d'arbre pour chacun des noeuds enfants dans ledit premier groupe et :
(i) sauter lesdites valeur et indication d'arbre quand ledit codage dudit premier noeud parent l'indique ;
(ii) indiquer l'importance de noeuds descendants en utilisant ladite indication d'arbre pour un premier ou un suivant desdits noeuds enfants ;
(iii) indiquer l'importance dudit premier ou suivant desdits noeuds enfants en utilisant ladite indication d'arbre pour ledit premier desdits noeuds enfants ;
(iv) sauter lesdites valeur et indication d'arbre pour ledit premier ou suivant desdits noeuds enfants lorsque cela peut être déterminé à partir du codage des autres desdits noeuds enfants dudit premier groupe ;
(v) répéter les étapes (i) à (iv) pour chacun des noeuds enfants dans ledit premier groupe ; et
(vi) omettre ladite indication d'arbre si lesdits noeuds enfants dans ledit premier groupe n'ont pas de noeuds descendants ;
(c) répéter lesdites étapes (b) précédentes pour un deuxième, troisième, ..., et N^{ième} groupe de noeuds enfants dérivés d'un deuxième, troisième, ..., N^{ième} noeud parent dudit premier arbre ;
(d) répéter lesdites étapes (b) et (c) précédentes pour un deuxième, troisième, ..., et M^{ième} arbre desdits arbres hiérarchiques.

2. Procédé de codage d'image selon la revendication 1 comprenant en outre l'étape suivante :
répéter lesdites étapes (b) et (c) pour chaque plan binaire desdits coefficients.

3. Procédé de codage d'image selon la revendication 1 ou la revendication 2, dans lequel l'étape de répétition desdites étapes (b) et (c) comprend l'opération suivante :
coder arithmétiquement lesdites valeurs et indications d'arbre en utilisant un contexte qui pour des noeuds enfants comporte d'autres noeuds enfants d'un groupe commun.

4. Procédé de codage d'image selon une quelconque revendication précédente, dans lequel l'étape de codage de ladite valeur comprend l'opération suivante :
coder une valeur choisie dans un groupe de valeurs comprenant un bit d'importance plus un bit de signe, un bit d'insignifiance, un bit d'affinement, et un saut.

5. Procédé de codage d'image selon une quelconque revendication précédente, dans lequel l'étape de codage de ladite indication d'arbre comprend l'opération suivante :
coder une indication d'arbre choisie dans un groupe d'indications d'arbre comprenant une racine d'arbre-zéro, un noeud descendant d'importance, et un saut.
